# EUROPÄISCHE PATENTANMELDUNG

(11) **EP 0 689 873 A2**
(43) Veröffentlichungstag der Anmeldung: **03.01.1996**
(21) Anmeldenummer: 95107966.4
(22) Anmeldetag: 26.05.1995
(51) Int. Cl.: B01L 5/04, B01D 47/02

(54) **Laborgaswäscher**

(30) Priorität: 03.06.1994 DE 9409016 U
(71) Anmelder: Keramchemie GmbH, D-56427 Siershahn (DE)
(72) Erfinder: Schmidt, Rolf, D-564 Berod (DE)
(74) Vertreter: Kossobutzki, Walter, Dipl.-Ing.(FH)

(57) **Zusammenfassung**

Die Erfindung bezieht sich auf eine Vorrichtung zum Auswaschen löslicher Schadgase aus der Abluft von Laborabzügen, bestehend aus einem Gehäuse mit einem Eintrittsstutzen für die zu reinigende Abluft und einem dazwischen angeordneten Füllkörper aufnehmenden Wäscher mit einem über eine Pumpe an einen Waschflüssigkeitsbehälter angeschlossenen Waschflüssigkeitsverteiler.

Um eine solche Vorrichtung problemlos im oberen Bereich eines Laborabzuges anordnen zu können, ist der Wäscher aus mindestens zwei direkt übereinander angeordneten und durch einen Seitenkanal (7) miteinander verbundenen, von der Abluft horizontal durchströmten Kreuzstrom-Wascheinheiten (5,6) gebildet.

## Beschreibung

Die Erfindung bezieht sich auf eine Vorrichtung zum Auswaschen löslicher Schadgase aus der Abluft von Laborabzügen, bestehend aus einem Gehäuse mit einem Eintrittsstutzen für die zu reinigende Abluft und einem dazwischen angeordneten Füllkörper aufnehmenden Wäscher mit einer über eine Pumpe an einen Waschflüssigkeitsbehälter angeschlossenen Waschflüssigkeitsverteiler.

Bei der Arbeit mit aggressiven und/oder toxischen Medien, beispielsweise beim Aufschließen mit Säuren, in einem Labor, insbesondere im Bereich eines sogenannten Laborabzuges, entstehen aggressive Abgase, die aus der Abluft entfernt werden müssen. Sind diese Schadgase löslich, können sie durch physikalische oder chemische Absorption mit Hilfe eines Gaswäschers aus der Abluft ausgewaschen werden. Dazu schreibt die DIN 12924, Teil 2, vor, direkt am Laborabzug einen Gaswäscher vorzusehen, der wahlweise mit Wasser oder Lauge betrieben werden kann und durch den die Schadgase durch Absorption in die Waschflüssigkeit übergeführt werden. Anschließend wird die abgezogene Waschflüssigkeit neutralisiert.

Aus der EP 0 498 072 A1 ist ein Laborgaswäscher bekannt, der aus einem schrankartigen Gehäuse besteht und einem Laborabzug zugeordnet ist. Im oberen Bereich des schrankartigen Gehäuses ist ein Innengehäuse vorgesehen, welches in seinem oberen Bereich einen Eintrittsstutzen für die aus dem Laborabzug austretende, noch zu reinigende Abluft und einen Austrittsstutzen für die abzuführende, gereinigte Abluft besitzt. Diese Abluft wird dann nach unten geleitet und dem unteren Bereich eines in dem Innengehäuse vorgesehenen Gaswäschers zugeführt, der Füllkörper enthält, über denen eine Bedüsungszone angeordnet ist. Von einem im Unterteil des schrankartigen Gehäuses aufgestellten Waschflüssigkeitstank wird die Waschflüssigkeit mittels einer Pumpe über die Bedüsungszone und die Füllkörper geführt und gelangt dann über einen Ablauf des Innengehäuses wieder in den Waschflüssigkeitsbehälter zurück. Während die Waschflüssigkeit in den Wäscher über die Füllkörper von oben nach unten rieselt, strömt die zu reinigende Abluft unten in den Wäscher ein, wird im Gegenstrom zur Waschflüssigkeit durch den Wäscher geführt und verläßt denselben dann an seiner Oberseite. Durch diese Führung der Abluft bedingt, weist ein solcher Gaswäscher eine verhältnismäßig große Bauhöhe auf, die sich dann noch weiter vergrößert, wenn über dem eigentlichen Wäscher ein Tropfenabscheider angeordnet wird.

Der Erfindung liegt deshalb die Aufgabe zugrunde, eine Vorrichtung zum Auswaschen löslicher Schadgase aus der Abluft von Laborabzügen so auszugestalten, daß dieselbe in ihrer Bauhöhe verringert wird und somit problemlos im oberen Bereich eines Laborabzuges angeordnet werden kann.

Zur Lösung dieser Aufgabe wird gemäß der Erfindung bei einer Vorrichtung der eingangs beschriebenen Gattung vorgeschlagen, daß der Wäscher aus mindestens zwei direkt übereinander angeordneten und durch einen Seitenkanal miteinander verbundenen, von der Abluft horizontal durchströmten Kreuzstrom-Wascheinheiten gebildet ist.

Durch eine solche Ausgestaltung wird ein hoher Wirkungsgrad bei äußerst kleiner Bauhöhe des Wäschers erreicht, so daß derselbe im oberen Bereich eines Laborabzuges, also über einen Labortisch, angeordnet werden kann und ein vollständiges Auswaschen der löslichen Schadgase sicherstellt.

Weitere Merkmale einer Vorrichtung gemäß der Erfindung sind in den Ansprüchen 2-8 offenbart.

Die Erfindung wird nachfolgend anhand eines in einer Zeichnung in stark vereinfachter Weise dargestellten Ausführungsbeispieles näher erläutert.

In dieser Zeichnung ist eine Vorrichtung zum Auswaschen löslicher Schadgase aus der Abluft eines Laborabzuges gezeigt, der aus einem schrankartigen Gehäuse 1 besteht, in dessen oberem Bereich ein Innengehäuse 2 ausgebildet ist. Das Innengehäuse 2 besitzt in seinem unteren Bereich einen Eintrittsstutzen 3 für die zu reinigende Abluft und in seinem oberen Bereich einen Austrittsstutzen 4 für die gereinigte Abluft.

In dem Innengehäuse 2 sind zwei Kreuzstrom-Wascheinheiten 5,6 vorgesehen, die direkt übereinander angeordnet und durch einen Seitenkanal 7 miteinander in Strömungsverbindung stehen. Beide Kreuzstrom-Wascheinheiten 5,6 sind in nur angedeuteter Weise mit Füllkörpern gefüllt, die jeweils auf einem besonders ausgestalteten, horizontalen Lochboden 8 aufliegen. Die Füllkörper können entweder lose geschüttet sein oder als blockartige Packungen eingebracht werden. Die Lochböden 8 sind so ausgebildet, daß zwar sich aufstauende Waschflüssigkeit nach unten durchströmen kann, der Durchtritt von Abluft jedoch ausgeschlossen ist. Am Ausgang der oberen Kreuzstrom-Wascheinheiten 6 sind zwei Tropfenabscheider 9,10 vorgesehen.

Mit geringem Abstand unter der unteren Kreuzstrom-Wascheinheit 5 befindet sich ein Waschflüssigkeitsbehälter 11, der beispielsweise mit Wasser gefüllt ist. Bedarfsweise kann dem Waschflüssigkeitsbehälter 11 ein besonderer, in der Zeichnung nicht dargestellter Laugenbehälter zugeordnet sein, der dann im unteren Bereich des Schrankes 1 angeordnet ist und von dem über eine Pumpe Lauge in den Waschflüssigkeitsbehälter 11 gefördert werden kann. Die in dem Waschflüssigkeitsbehälter 11 befindliche Waschflüssigkeit wird aus demselben über eine Leitung 12 mittels einer Pumpe 13 abgezogen und zu einem ebenfalls als Lochboden ausgebildeten Waschflüssigkeitsverteiler 14 geführt, von dem sie über die Füllkörper der oberen Kreuzstrom-Wascheinheit 6 rieselt. Diese Waschflüssigkeit staut sich dann in einer verhältnismäßig geringen Höhe auf dem besonders ausgebildeten Lochboden 8 der oberen Kreuzstrom-Wascheinheit 6, und schließt aus, daß durch diesen Lochboden 8 Abluft hindurchtreten kann. Von dem oberen Lochboden 8 rieselt dann die Waschflüssigkeit über die Füllkörper der unteren Kreuzstrom-Wascheinheit 5 und staut sich ebenfalls in geringer Höhe auf dem unteren Lochboden 8, so daß auch hier keine Abluft hindurchtreten kann. Dem Waschflüssigkeitsbehälter 11 sind absperrbare Leitungen 15,16 zugeordnet, über die Waschflüssigkeit zugeführt bzw. abgeführt werden kann. Diese Leitungen werden in Abhängigkeit von Meßeinrichtungen geöffnet und geschlossen, die den Flüssigkeitsstand im Waschflüssigkeitsbehälter 11 überwachen und die elektrische Leitfähigkeit der Waschflüssigkeit messen.

Die in den Eintrittstutzen 3 eintretende Abluft wird nun in demselben umgelenkt und strömt in horizontaler Richtung durch die erste bzw. untere Kreuzstrom-Wascheinheit 5. Sodann gelangt diese Abluft über den Seitenkanal 7 in die Kreuzstrom-Wascheinheit 6, die ebenfalls horizontal durchströmt wird. Anschließend strömt die Abluft durch die Tropfenabscheider 9,10 und gelangt dann in den Austrittsstutzen 4. Für diese Strömung der Abluft kann in dem Eintrittsstutzen 3 oder in dem Austrittsstutzen 4 ein nicht dargestellter Ventilator angeordnet sein. In den beiden Kreuzstrom-Wascheinheiten 5,6 werden die löslichen Schadstoffe aus der Abluft ausgewaschen, so daß dieselbe gereinigt über den Austrittsstutzen 4 das Innengehäuse 2 bzw. das schrankartige Gehäuse 1 verläßt. Das Kraft-Weg-Diagramm und damit die Kurve 8 eines einwandfreien Borstenbündels 1 wird nun elektronisch gespeichert.

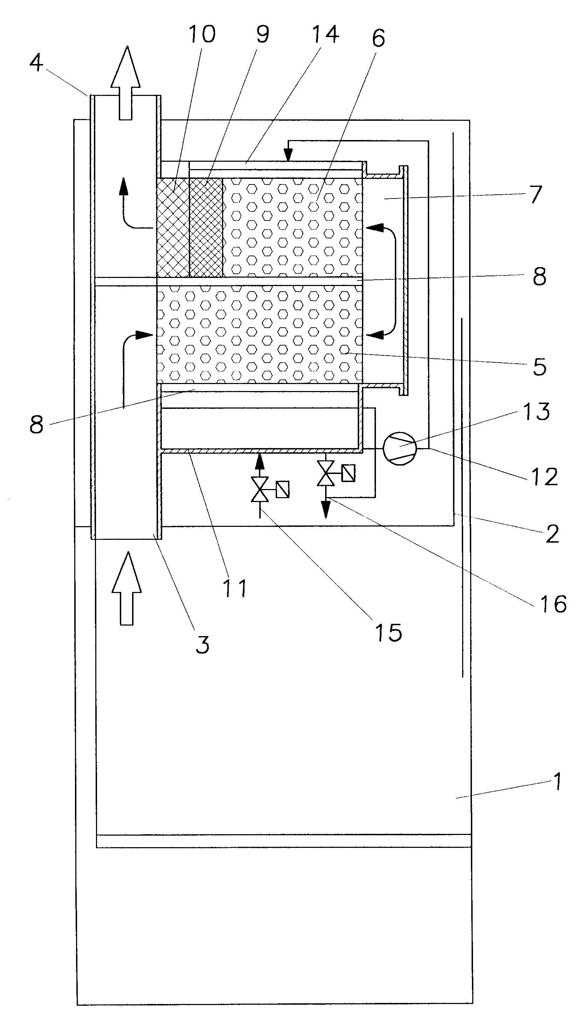

Für die weiteren Ausführungen wird nun davon ausgegangen, daß jetzt ein Borstenkopf in der Lage gemäß Fig. 1 eingespannt wird, bei dem beispielsweise in Richtung des Pfeiles 7 das dritte Borstenbündel 3 des Borstenfeldes 1 fehlt. Bei dem sich anschließenden Bewegen des Tasters 5

## Patentansprüche

1. Vorrichtung zum Auswaschen löslicher Schadgase aus der Abluft von Laborabzügen, bestehend aus einem Gehäuse mit einem Eintrittsstutzen für die zu reinigende Abluft und einem dazwischen angeordneten Füllkörper aufnehmenden Wäscher mit einem über eine Pumpe an einen Waschflüssigkeitsbehälter angeschlossenen Waschflüssigkeitsverteiler,
dadurch gekennzeichnet,
daß der Wäscher aus mindestens zwei direkt übereinander angeordneten und durch einen Seitenkanal (7) miteinander verbundenen, von der Abluft horizontal durchströmten Kreuzstrom-Wascheinheiten (5,6) gebildet ist.

2. Vorrichtung nach Anspruch 1,
dadurch gekennzeichnet,
daß jeder Kreuzstrom-Wascheinheit (5,6) ein Waschflüssigkeitsverteiler (14) zugeordnet ist.

3. Vorrichtung nach Anspruch 1,
dadurch gekennzeichnet,
daß nur der oberen Kreuzstrom-Wascheinheit (6) ein Waschflüssigkeitsverteiler (14) zugeordnet ist und ein Zwischenboden (8) nur die Waschflüssigkeit durchlassende Öffnungen aufweist.

4. Vorrichtung nach mindestens einem der Ansprüche 1-3,
dadurch gekennzeichnet,
daß am Ausgang der oberen Kreuzstrom-Wascheinheit (6) mindestens ein Tropfenabscheider (9,10) angeordnet ist.

5. Vorrichtung nach mindestens einem der Ansprüche 1-4,
dadurch gekennzeichnet,
daß der Waschflüssigkeitsbehälter (11) direkt unter der unteren Kreuzstrom-Wascheinheit (5) angeordnet ist.

6. Vorrichtung nach mindestens einem der Ansprüche 1-5,
dadurch gekennzeichnet,
daß dem Waschflüssigkeitsbehälter (11) ein Laugenbehälter zugeordnet ist.

7. Vorrichtung nach mindestens einem der Ansprüche 1-6,
dadurch gekennzeichnet,
daß die Kreuzstrom-Wascheinheit mit lose geschütteten Füllkörpern bestückt sind.

8. Vorrichtung nach mindestens einem der Ansprüche 1-6,
dadurch gekennzeichnet,
daß die Kreuzstrom-Wascheinheiten (5) mit als Füllkörper ausgebildeten Packungen bestückt sind.
